(19) Europäisches Patentamt
European Patent Office
Office européen des brevets

(11) **EP 4 138 051 B1**

(12) **EUROPEAN PATENT SPECIFICATION**

(45) Date of publication and mention
of the grant of the patent:
**24.09.2025 Bulletin 2025/39**

(21) Application number: **21191933.7**

(22) Date of filing: **18.08.2021**

(51) International Patent Classification (IPC):
*G07C 5/00* (2006.01)    *G07C 5/08* (2006.01)
*G01C 21/00* (2006.01)    *G06N 3/006* (2023.01)
*G06N 7/01* (2023.01)    *G06N 20/00* (2019.01)
*H04L 67/12* (2022.01)    *H04L 67/06* (2022.01)
*H04L 67/62* (2022.01)    *G01C 21/34* (2006.01)
*G08B 13/196* (2006.01)    *G08G 1/01* (2006.01)

(52) Cooperative Patent Classification (CPC):
G07C 5/0841; G01C 21/3415; G01C 21/3453;
G01C 21/3841; G01C 21/3848; G06N 3/006;
G06N 7/01; G06N 20/00; G07C 5/008;
G08G 1/0112; G08G 1/0129; G08G 1/0141;
H04L 67/06; H04L 67/12; H04L 67/62;    (Cont.)

(54) **METHOD OF COLLECTING DATA FROM FLEET OF VEHICLES**

VERFAHREN ZUM SAMMELN VON DATEN EINER FAHRZEUGFLOTTE

PROCÉDÉ DE COLLECTE DE DONNÉES À PARTIR D'UNE FLOTTE DE VÉHICULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**22.02.2023 Bulletin 2023/08**

(73) Proprietor: **Aptiv Technologies AG
8200 Schaffhausen (CH)**

(72) Inventors:
• **ARNOLD, Michael
40210 Düsseldorf (DE)**
• **BEHRENDS, Sönke
40477 Düsseldorf (DE)**
• **CREMER, Peet
40239 Düsseldorf (DE)**
• **MÜLLER, Dennis
47445 Moers (DE)**

(74) Representative: **Lewis Silkin LLP
Arbor
255 Blackfriars Road
London SE1 9AX (GB)**

(56) References cited:
EP-A1- 3 618 011    CN-A- 112 348 992
US-A1- 2017 352 261    US-A1- 2020 250 900
US-A1- 2021 014 323

(52) Cooperative Patent Classification (CPC): (Cont.)
H04W 4/38; H04W 4/44

## EP 4 138 051 B1

**Description**

TECHNICAL FIELD

The present disclosure relates to the field of collecting data by a fleet of data recording vehicles and uploading the collected data to a host collecting system. The data recorded by the recording vehicles can include raw data captured by sensors, data derived from the raw data (for example object detection data), and/or external data (for example GPS data, weather data, etc.). In the automotive industry, such data from vehicles is collected for algorithm development and/or validation purposes, for example for training a neural network, especially in the advanced driver-assistance systems (ADAS) and in the autonomous driving domain.

BACKGROUND

A known method to record data for algorithm development and validation purposes for ADAS uses a single vehicle or a fleet of vehicles outfitted with the desired sensor hardware including typically radars, lidars and cameras. The drivers of the vehicles then drive around locations that are promising to provide valuable and useful data for development and validation purposes. While each vehicle drives, the sensor data is logged using an automotive data recording device onto a hard drive equipped in the vehicle, as disclosed for example in US6073063A. After recording, the hard-drives of the recording vehicles are brought back to a collection site for further distribution and storage of the data.

There are many drawbacks to the above known method of collecting data from vehicles, such as a high latency until the data is available, the uncertain value of the collected data that may not be as useful as hoped, the necessity to select the data after recording, etc...

In order to address the drawbacks of the above known method, there has been a recent trend in the automotive industry towards transporting data over-the-air rather than requiring physical access to the recording vehicles.

Event data recording is a technique used to record information related to vehicle crashes or accidents. An event data recorder is installed in the vehicle and records data during critical moments in time around a crash, an accident or another important event. The amount of recorded event data is small. Consequently, the event data recordings can easily be transmitted from the vehicle to a central data collection and storing system over-the-air.

US6505106B1 also discloses a fleet of vehicles each equipped with in-vehicle data collection system that transmits information to a host server through a cellular network. The host server includes a data repository for storing data collected from a fleet of vehicles.

EP 3 618 011 A1 relates to a vehicle data collection system, wherein a server sends a request for data collection to an on-vehicle device, including collection conditions. The vehicle collects and transmits the data corresponding to the collection conditions.

US 2017/352261 A1 discloses a remote vehicle data collection system wherein data are collected at a vehicle based on a script received from a server, and are transmitted to the server.

CN 112 348 992 A relates to a vehicle data recorder. A server sends upload policies related to improper driving to a vehicle. The vehicle records, recognises and uploads video data to the server, and the server analyses the data and updates the upload policies based on the received data.

Edge computing is a distributed computing method that brings computation and data storage closer to the location where it is needed, to improve response times and save bandwidth. In the autonomous driving domain, edge computing is considered as a promising technology to offload expensive computations away from recording platforms in the vehicles onto stationary data centers by communicating data over-the-air between the data centers and the vehicles.

Despite all the developments above discussed, there is still a problem in transmitting data over-the-air from a fleet of recording vehicles to a host data collecting system because the amount of data to transmit is very important and the transmission over-the-air is limited by the available bandwidth, even in a 5G cellular network.

Therefore, there is a need to minimize the amount of recording data transmitted over-the-air from the fleet of recording vehicles to the host data collecting system for example to allow an upload of the recording data in real-time, or almost in real time, through a cellular communication network such as a 5G network, and/or to supplement the recordings with more details.

SUMMARY

The present disclosure concerns a method of collecting data from a vehicle and uploading over-the-air at least part of the collected data to a host data collecting system, according to claim 1.

In the present disclosure, at the vehicle level, in the storing module, one or more pieces of data from the recording data (termed as recording data snippets) are selected as pieces of data of high value (in other words: as relevant pieces of data) in order to achieve the atomic collection target (in other words: the individual collection target). The selection is performed based on the data values calculated using the data value metrics downloaded from the host collecting system. A selected piece of data is defined by a time window of the recording. Then, the only selected pieces of data are transmitted (uploaded) to the host collecting system. This allows to reduce significantly the amount of data that is transmitted from a recording vehicle to the host collecting system, without impacting the value of the data collected by the host collecting system. It is costly in terms of hardware and power resources to save data, for example in a cloud, and process data, if the data is not interesting. The earlier the decision is made on which data is interesting (in other words: of high value) and which data is not interesting (in other words: of low value) the more resources can be saved in the long run. The present disclosure allows to make the decision in the recording vehicle, based on a predefined list of things that is considered as interesting by the host collecting system, corresponding to the data value metrics, and a policy that defines how to balance the values of the data according to the different metrics.

In an embodiment, the first method further includes the steps of selecting, from the recording data, at least one data snippet of low value, to delete, within a time window, based on the computed data values;
deleting the at least one data snippet of low value from the storing module.

This allows to free the storage capacity of the recording module in the recording vehicle.

In an embodiment, the data collection target including m+1 data value metrics related to different atomic collection targets, with m≥0, and a collection policy defining m+1 respective weights for the m+1 data value metrics, the method further includes the steps of

computing m+1 sets of data values of the recording data over time, according to the m+1 data value metrics respectively; and
aggregating the m+1 sets of data values, according to the collection policy by calculating a weighted sum of the m+1 sets of data values, to compute aggregated data values of the recording data over time,
and wherein selecting a recording data snippet is performed based on the aggregated data values of the recording data over time.

The host collecting system might be interested in collecting information on a catalogue of things (in other words: on different aspects). A data value metric, corresponding to an atomic collection target, allows to measure one of the things of interest. The collection target can include different data value metrics corresponding to different atomic (individual) collection targets. The collection policy defines a way to balance out the difference between the different things of interest in the recording data. It attributes respective weight to the different data value metrics (in other words: to the different atomic collection targets).

The first method can further include steps of downloading an update information of the data collection target from the host collecting system over-the-air and updating the data collection target according to the update information.

As the collection of data by the host collecting system progresses towards atomic (individual) collection targets, the value of the data may change. Typically, if the host collecting system has already collected a lot of data related to a specific thing or a specific scenario, then collecting more data related to the same thing or same scenario has intrinsically less value and less value than collecting data on rare things or rare scenarios. The update of the data collection target allows to adapt the collection policy and/or the data value metrics to such a change in the value of the data over time.

In an embodiment, in case that a plurality of recording data snippets to upload are selected from the recording data, the first method further includes the steps of:

calculating a value density for each recording data snippet to upload, the value density of a piece of data corresponding to the value of the piece data per unit of time;
putting the plurality of recording data snippets to upload in a transmission priority queue and ordering said recording data snippets to upload in the transmission priority queue based on said value density.

The first method can further include the steps of:

at a current time, determining a plurality of routes that the vehicle can take;
for each route, generating a route encoding that encodes in numerical values an information on predicted values of said route for a plurality of metrics,
providing the route encodings and additional environmental information that is independent of the routes to the reinforcement learning agent that decides whether or not to change a current route and, when appropriate, selects one of the determined routes, in order to optimize a reward;
recording data from data sources in the vehicle over time while the vehicle drives along the selected route (that is either the current route, when it is decided not to change the current route, or a route selected among the plurality of determined routes);
uploading at least part of the recording data to the host data collecting system and, in return, receiving a reward from the host data collecting system; providing the reward to the reinforcement learning agent.

The path planning allows the vehicle to take a path (road) that would likely maximize the value of the recording data, instead of driving randomly. Therefore, the recording of data is more efficient considering the atomic collection targets.

The present disclosure also concerns a method of collecting data from a fleet of recording vehicles, carried out by a host collecting system connected to the fleet of vehicles over-the-air, according to claim 7.

In an embodiment, in the step of providing a data collection target, the data collection management module provides m+1 data value metrics related to different atomic collection targets, with m≥0, and a collection policy defining m+1 respective weights for the m+1 data value metrics.

The second method can further include the following steps:

at the data collection management module, updating said data collection target depending on the recording data snippets already received from the fleet of vehicles, and

downloading an update information of said data collection target to the fleet of vehicles over-the-air.

The data value metrics can be generated so as to assign normalized data values.

The present disclosure also concerns a vehicle data recording device, including

at least one interface to receive recording data from data sources in the vehicle and transmit recording data snippets to upload to a host data collecting system over-the-air;

a storing module for storing the recording data;

means adapted to execute the steps of the first method previously defined.

The present disclosure also concerns a vehicle including the vehicle data recording device above defined.

The present disclosure also concerns a host data collecting system, including

a first interface to interface with a fleet of recording vehicles over-the-air;

a second interface to interface with a storage infrastructure;

and means adapted to execute the steps of the second method previously defined.

The present disclosure also concerns a distributed system including a fleet of recording vehicles as above defined, a host data collecting system as above defined connected to the fleet of recording vehicles over-the-air.

BRIEF DESCRIPTION OF THE DRAWINGS

Other features, purposes and advantages of the disclosure will become more explicit by means of reading the detailed statement of the non-restrictive embodiments made with reference to the accompanying drawings.

Figure 1 shows a distributed system for collecting data from recording vehicles into a host collecting system, according to an embodiment.

Figure 2 shows a functional block diagram of an in-vehicle data recording device, according to an embodiment.

Figure 3 shows a flowchart of a first method, carried out by an in-vehicle data recording device, of collecting data from a vehicle and uploading over-the-air at least part of the collected data to a host data collecting system, and a second method of collecting data from a fleet of vehicles, carried out by the host data collecting system.

Figure 4 shows a flowchart of a process of updating a data collection target, according to an embodiment.

Figure 5 represents recording data values over time according to three data value metrics and aggregated data values over time, according to an embodiment.

Figure 6 illustrates recording data snippets to upload and recording data snippets to delete selected based on the aggregated data values of figure 5.

DETAILED DESCRIPTION

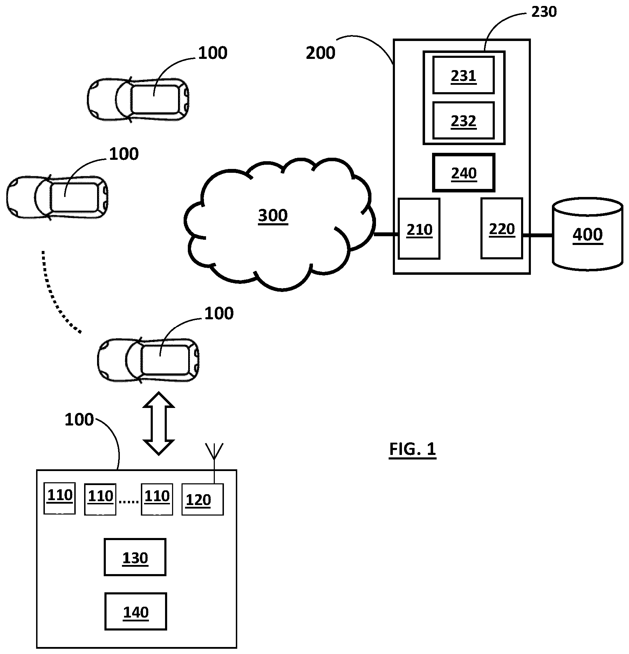

Figure 1 shows a distributed system for collecting data from a fleet or a plurality of recording vehicles 100 by a host collecting system 200. The recording vehicles 100 can communicate with the host collecting system 200 over-the-air, for example through a mobile communication network 300 such as a 5G network.

The data, or recording data, from each recording vehicle 100 can include different types of data such as raw data, derived data and/or external data. The data collected from the vehicle 100 is recorded over time, typically while the vehicle is driving.

The raw data (also called atomic data or source data) is data that has not been processed. The raw data includes in a non-limitative manner sensor data from sensors mounted in the vehicle 100 (such as radars, lidars and cameras), GPS data, speed data, yaw rate data, etc...

The derived data include data derived from raw data by data processing. The data processing can be carried out by hardware means and/or software means in the vehicle 100, that execute processing operations and/or algorithms (for example machine learning algorithms or any other type of algorithms). Some in-vehicle hardware and software components can perform an object detection based on radar, lidar or camera data (with or without sensor fusion), a semantic segmentation on camera data, an encoding of signatures describing various aspects of an environmental information (in the environment of the vehicle), a computation of data structures and/or statistical information derived from an object detection module or another algorithmic output.

The external data include data from sources external to the vehicle 100. Such data can be acquired via API (for *Application Programming Interface*) calls to third party data providers via the mobile communication network 300. Non-limitative examples for such external data include traffic data (e.g., traffic flow, construction areas, etc.), weather service data, time related data (e.g., national holiday, weekday, week-end day, etc.), map services data (e.g., road layout information, satellite images, mobile network coverage, etc.), current transmission rate through the mobile communication network 300, data from environmental sources (e.g., shops, schools, bus stations, parks, etc.), data from routing services, data from the host collecting system 200.

The host collecting system 200 is responsible for providing a data collection target $T_0$, downloading it to the fleet of recording vehicles 100 and, in return, collecting pieces of recording data (also termed as "recording data snippets") collected by the fleet of recording vehicles 100.

A data collection target $T_0$ defines one or more atomic (individual) collection targets $c_j$, with j=0, ..., m, and includes one or more data value metrics $v_{c_j}$ in relation to the atomic collection targets $c_j$. A data value metric $v_{c_j}$ is a function assigning a data value (in other words: a number) to a piece of data corresponding to a given point in time i (in other words: to a data point for time i), said data value representing an amount of progress in achieving the corresponding atomic collection target $c_j$. In other words, each data value metric $v_{c_j}$ allows to measure a progress towards an atomic collection target $c_j$. It gives hint on a value of a piece of data. The atomic collection targets $c_j$ can be quantified targets defined by a given target amount or number. Illustrative and non-limitative examples of atomic collection targets are given below:

- a number of kilometers on specific roads (i.e. highway, city, ...);
- a specific time of recordings spent in specific scenarios (i.e. X amount of hours spent in traffic jams, day, dawn, night, weekend, rush hour, ...);
- a number of unique objects of a specific class (i.e. bike, truck, pedestrian, ...);
- a number of specific maneuvers (i.e. overtaking, lane change, ...);
- a number of specific road scenarios (i.e. roundabouts, specific crossing constellations, passenger crossings, construction areas, tunnels, bridges, ...);
- a number of scenarios selected by active learning methods or predictive models;
- a number of scenarios selected through outlier detection (in other words: statistically rare detection) and other means of collecting underrepresented data points (in other words: a single or a combination of sensor measurements at a given point in time).

Optionally, the atomic collection targets $c_j$ could be constrained somehow in order to diversify the data collection. For example, a constraint can be to perform the data collection across multiple regions (countries, cities, ...). Another constraint can be to limit data collection along routes already recorded in the past.

The atomic collection targets $c_j$ can be in the form of code to be executed.

In case that the data collection target $T_0$ includes m+1 data value metrics $v_{c_j}$ related to m+1 different atomic collection targets $c_j$ (forming a set C of atomic collection targets $c_j$: $C = \{c_0, ..., c_m\}$), with m≥0 and the value metric index j ranging from 0 to m, the data collection target $T_0$ further includes a collection policy P that defines how to weight the different atomic collection targets $c_j$ in the data collection target $T_0$. A policy P can define a way to merge multiple atomic measures or value metrics. The collection policy P attributes respective weights $p_{c_j}$ to be applied to the different data value metrics $v_{c_j}$. In other words, the collection policy P defines m+1 respective weights $p_{c_j}$ for the m+1 data value metrics $v_{c_j}$ related to m+1

atomic collection targets $c_j$, with $0 \leq j \leq m$. The collection policy can be expressed as follows: $P = \{p_{c_0}, ..., p_{c_m}\}$. The set of weights $\{p_{c_0}, ..., p_{c_m}\}$ is preferably such that $\sum_{j=0}^{m} p_{c_j} = 1$.

As previously explained, each collection value metric $v_{c_j}$ is a function that assigns a data value to a recorded data point for time i (in other word: to a piece of data for a given point i in time) in a recording R. A recording R is a data collection captured by a recording vehicle 100 and contains raw data provided by sensors in the recording vehicle 100 and/or data from other data sources in the recording vehicle 100 (including derived data and/or external data, as explained later).

In addition, a value V(R) of the recording R aggregated over all time points $\{t_0, ..., t_n\}$ and atomic collection targets $\{c_0, ..., c_m\}$, with collection policy P, also termed as "recording value", can be expressed as follows:

$$V(R) = \sum_{i=t_0}^{t_n} \sum_{j=c_0}^{c_m} p_{c_j} v_{c_j}(R, i) \qquad (1)$$

Alternatively, the value V(R) could be calculated in the form of an integral over time for the individual policy weighted data value metrics.

In a particular embodiment, the collection value metrics $v_{c_j}$ can produce values in a normalized range (i.e., [0,..,1.]). In that case, the data value assigned to a recorded data point in time i is included between 0 and 1 (including 0 and 1). In a first illustrative example, the atomic collection target is a number of overtaking maneuvers and the value metric attributes the value 1 when an overtaking maneuver is happening and a value 0 when no overtaking maneuver is happening. In a second illustrative example, the atomic collection target is a number of bikes, and the value metric gives a value representing a number of bikes in a scene. This value is normalized between 0 and 1 by a mapping function, based on a maximal number of bikes for example, or alternatively based on an average number. The normalization facilitates the combination or aggregation of the data values computed by the different value metrics, as explained later.

As will be explained in more detail in the description of the method carried out on the vehicle side, the collection policy P is used to aggregate the m+1 sets of data values over time respectively produced by the m+1 data value metrics for a recording R and thus produce a set of global or aggregated data values over time for the recording R.

Optionally, the data collection target can be updated by the host collection system 200, as will be described later. As the recording data from the fleet of vehicles 100 is collected by the host collecting system, the value of the recording data may change over time. Typically, if the system has already collected a lot of data related to a specific atomic collection target, usually the value of new data related to the same atomic collection target goes down. For example, the data are collected to develop a machine learning model that is a car detector. If the car detector is new, every car that is collected has a large value because the model needs every car to be trained to allow the model to be good at detecting cars. When the model is already good at detecting cars, collecting more cars will be inefficient to improve the model. In that case, it would be more interesting to collect data on the distribution of the cars collected and collect for example more data on rare cars, which helps towards developing a better model. The value of data or developing machine learning models goes down over time, until only slight improvements of the models can be achieved. At this point usually a large amount of data is needed to achieve only minor improvements. The atomic value metrics, and more generally on the collection target $T_0$, can be updated depending on the amount of data that has already been collected.

In the present disclosure, "k" represents an update index (integer) of the data collection target, with k≥0. In other words, by convention, the data collection targets successively updated are noted $T_k$ (i.e., $T_0$, $T_1$, ...).

Each recording vehicle 100 has a plurality of sources of data (raw data, derived data and/or external data) 110, a radio transmitter-receiver 120, a central processing unit 130 and a data recording device 140.

The sources of data 110 include hardware components and software components that provide raw data and/or derived data, an optionally external data. The data sources 110 can be of different types such as sensors (e.g., radars, lidars and/or cameras) providing raw data (e.g., radar data, lidar data and/or camera data), calculators processing input data that generally include raw data and outputting derived data, machine learning or algorithmic modules performing one or more tasks (e.g., object detection) from input data (e.g., raw data) and outputting derived data, functional modules receiving external data through the network 300, etc.

The radio transmitter-receiver 120 has the functions of transmitting and receiving radio signals (including information and/or messages and/or data) through the mobile communication network 300.

All the elements 110, 120, 140 of the recording vehicle 100 are connected to the central processing unit 130 that controls their operation.

The data recording device 140 is responsible for collecting (in other words: receiving) data from the sources of data in the vehicle 100 and uploading (in other words: transmitting) at least part of the collected data to the host collecting system 200 over-the-air, through the mobile communication network 300. It has hardware means and software means (in other words: hardware components and software components) to implement the first method, described later, of collecting data from the recording vehicle 100 and uploading at least part of the collected data to the host data collecting system 200 over-the-air.

In an embodiment, the exchange of information between the data recording device 140 and the host collecting system 200 is carried out via the in-vehicle radio transmitter-receiver 120. Alternatively, the data recording device 140 could include a radio transmitter-receiver to exchange information directly with the host data collecting system 200.

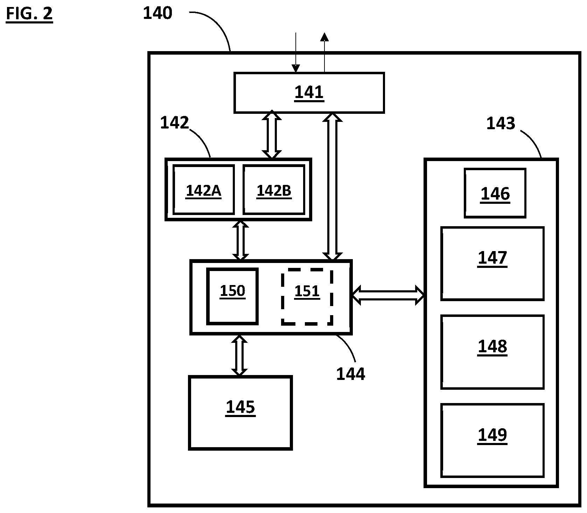

As shown in figure 2, in an embodiment, the in-vehicle data recording device 140 has an input/output interface 141 to interface with the vehicle 100, and a storing module or buffer 142.

In addition, the in-vehicle data recording device 140 has hardware means and software means (in other words: hardware components and software components) to execute the steps of the first method of collecting recording data from the vehicle 100, carried out by the data recording device 140, that will be described later. In a particular embodiment, the hardware means and software means include a recording data management module 143, a reinforcement learning agent component 144 and a central processing unit (CPU) 145. Alternatively, the in-vehicle data recording device 140 could use the CPU 130 of the vehicle 100 (instead of the CPU 145).

The input/output interface 141 exchanges information with the vehicle 100 (e.g., data from in-vehicle data sources, messages from the host collecting system 200 received via the transmitter-receiver of the vehicle 100, data to upload to the host collecting system 200 via the transmitter-receiver of the vehicle 100, etc.), as will be explained later. For example, the input/output interface 141 communicates with the central processing unit 130 in the vehicle 100.

The storing module 142 is responsible for holding in memory recording data collected from the vehicle 100. In an embodiment, the storing module 142 has a hardware part 142A that is a memory such as a buffer for holding (at least temporarily) the recording data from the vehicle 100. Optionally, the storing module 142 has also a software part 142B responsible for taking some actions on the recording data held by the memory 142A. The software part 142B runs on the CPU 145. The memory 142A has a given storage capacity and specific utilization properties, that are provided to the reinforcement learning agent component 144. The storing module 142 has access to recording data value estimates related to the recording data stored in the memory 142A, as explained later.

The reinforcement learning agent component 144 is a software component implementing reinforcement learning algorithms. It can run on the central processing unit 145.

A task or function of the reinforcement learning agent component 144, schematically represented by a block 150 in figure 2, is to decide on if to upload or delete pieces of recording data, and to select pieces of recording data to upload to the host collecting system 200 and pieces of recording data to delete from the storing module 142, from a recording R. It is costly in terms of resources and processing capacities to save data in the storing infrastructure 400 and process data, if the data is not interesting. The earlier the decision is made on which data is useful and which data is not, the more resources and processing capacities can be saved in the long run. The present disclosure allows to decide the pieces of data to upload and the pieces of data to delete already in the vehicle 100, based on the data value metrics and the collection policy that defines how to balance the data values according to the different metrics.

The reinforcement learning agent component 144 has an interface to interface the storing module 142 and select pieces of recording data to upload (in other words: to transmit) to the host collecting system 200 and pieces of recording data to delete from the storing module 142. In the present description, each selected piece of data (to upload or to delete) is called a recording data snippet. It is a piece of data of a recording R corresponding to a time window. A recording data snippet is defined by a time window within the time range of the recording R. In some embodiments, the selection of recording data snippets (to upload or to delete) follows one or more of the following constraints:

- a minimum length of the recording data snippets (in other words: a minimum duration for the time window of the recording data snippets);
- a maximum length of the recording data snippets (in other words: a maximum duration for the time window of the recording data snippets);
- buffer (in other words: time, for example a few seconds, like 5 seconds) before and after an interesting region like a tunnel;
- each recording data snippet must be continuous (in other words: each recording data snippet includes a portion of the recording data continuous over time);
- the different recording data snippets do not overlap.

Regarding the (time) length of the recording data snippets to upload, it may be desired not to collect a piece of information that is very short in time, for example a piece of data lasting only 1 second. For example, a recording data snippet must be within a time window of more than x seconds with $x \geq 10$ seconds for being able to be selected for uploading.

In an embodiment, the selection of recording data snippets to upload or to delete is carried out, in an automatic manner, by the reinforcement learning agent component 144 based on the data collection target $T_0$ downloaded from the host collection system 200, as will be explained later in the description of the method of collecting data. In another embodiment, the selection can be made by the RL agent. Alternatively, a fixed algorithm sets thresholds and constraints to make local optimizations on what would be the best to upload or not.

The goal of the reinforcement learning agent 144 is to maximize an objective function (in other words: a reward function) corresponding to the received data collection target $T_0$. The reinforcement learning agent 144 tries to maximize one or more received reward(s), that is in part tied to the received data collection target. It can do so by receiving different types of rewards. The list below gives illustrative and non-limitative example of actions that are rewarded :

i) successfully uploading recording data snippets (large rewards that are for example relative to a value density of the uploaded recording data snippets);
ii) finishing an upload (additional reward weighted with the overall value of the recording data snippet, which provides an incentive to finish uploads instead of switching between valuable snippets);
iii) the process of uploading recording data snippets (continuous small rewards proportional to the value density of the uploaded data snippets);
iv) maintaining a good value density for the recording data in the recording buffer 142A (medium rewards), in case that the bandwidth of the mobile network 300 is limited and temporarily prevents the uploading of recording data snippets.

Regarding the above items i), ii) and iii), a difference can be made between finishing an upload and the process of uploading. If a reward is received only at the end of the upload, it might be harder to associate the reward with the actions of uploading data taken before. When a small reward is also given as data is being uploaded, the RL agent gets an immediate reward, which indicates that it is on the right track. In the end, we are only interested in completely uploaded recording snippets, which is why the model receives a large reward after successfully uploading the recording data snippets.

The value density of a piece of data can be defined as the value of the piece data per unit of time.

The reinforcement learning agent component 144 is only rewarded for recording data snippets that have been successfully uploaded. Not uploading anything gives neither a reward nor a penalty. If the vehicle 100 is driving around in an area that has a bad connection to mobile network 300, the vehicle 100 cannot upload much data, and consequently cannot collect much rewards.

In addition, and optionally, the reinforcement learning agent component 144 can be penalized for example when:

- the recording buffer is likely to undergo a buffer overflow (large penalty, but optional);
- circumstances such as a bad mobile network connectivity occur (small penalty, but optional);
- keeping data snippets in the recording buffer 142A, that are corrupted in any way, or too short to fulfil otherwise minimal requirements like minimal consecutive recording length.

Other types of rewards/penalties could be used.

The rewards and the penalties can be provided to the reinforcement learning agent component 144 by the host collecting system 200 and/or the recording data management module 143.

Instead of the reinforcement learning agent component 144, a component implementing an optimization algorithm could be used.

The recording data management module 143 is a software module that manages the recording data stored into the storing module 142.

The recording data management module 143 has a memory 146 storing the current (valid) data collection target $T_k$.

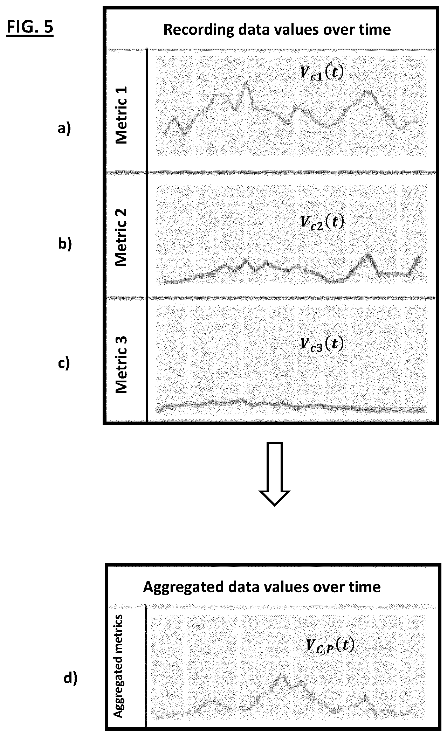

A first role of the recording data management module 143 is to calculate data values over time for the recording data stored into the storing module 142, according to the one or more data value metrics and the collection policy (when applicable) of the current data collection target $T_0$. The recording data management module 143 has a value calculation component 147 for calculating data values of the recording data. The component 147 can be a software component running on the CPU 145. In case that the current data collection target, for example $T_0$, defines m+1 data value metrics $\{v_{c_0}, ... , v_{c_m}\}$ and a collection policy P attributing the weights $\{p_{c_0}, ..., p_{c_m}\}$ to the data value metrics $\{v_{c_0}, ... , v_{c_m}\}$, the calculation component 143 is responsible for computing m+1 sets of data values over time for the recording data (stored into the storing module 142) using the m+1 data value metrics $\{v_{c_0}, ... , v_{c_m}\}$, respectively, and then aggregating the m+1 sets of data values according to the collection policy P, by computing a sum of the m+1 sets of data values respectively weighted with the corresponding weights $\{p_{c_0}, ... , p_{c_m}\}$, to obtain a set of aggregated data values over time for the recording data. Illustrative examples of three sets of data values calculated according to three different metrics and a set of aggregated data values based on the policy P, for a recording R, is shown in figure 5.

A second role of the recording data management module 143 is to take some actions of upload or deletion on the recording data in the storing module 142, based on the outcome of the decision and selection carried out by the reinforcement learning agent component 144 (in other words: based on the output from the component 144). Thus, the recording data management module 143 and the reinforcement learning agent component 144 cooperate in handling the management of the recording data stored in the memory (e.g., buffer) 142A. In an embodiment, the recording data management module 143 has two software components to manage the actions of upload and deletion of pieces of recording data: a transmission priority queue component 148 and a garbage collector component 149.

The transmission priority queue component 148 is responsible for controlling the transmission of pieces of recording data (recording data snippets) to upload, held by the storing module 142, to the host collecting system 200 through the mobile communication network 300, here via the in-vehicle transmitter-receiver 120. The component 148 can provide at least part of the following properties:

- a data transmission rate through the mobile network connection;
- a transmission priority queue with an ordering of pieces of recording data to upload (in other words: to transmit) based on respective data value densities;
- an estimation of time remaining to finish uploading current pieces of recording data to upload (in other words: the pieces of recording data currently in the transmission queue);
- a transmission of a piece of recording data already started should not be interrupted by the transmission of another piece of data of higher value density following up in the queue (but this is optional);
- during and/or after successfully uploading a recording data snippet to the host collecting system 200, the transmission priority queue component 148 rewards the reinforcement learning agent component 144 in proportion to a total value of the recording data snippet;
- after uploading a recording data snippet to the host collecting system 200, the transmission priority queue component 148 can then provide the uploaded recording data snippet to the garbage collector component 149 in order to free capacity in the buffer 142A.

The garbage collector component 149 is responsible for deleting pieces of recording data (recording data snippets) from the storing module 142, in order to free its storage capacity. A recording data snippet can be explicitly registered for deletion by

- the reinforcement learning agent component 144 due to a low recording data value estimate for the recording data snippet, or
- the transmission priority queue component 148 after uploading the recording data snippet to the host collecting system 200; or
- the storing module 142 in case where the requirement of a minimum length for the recording data snippet cannot be fulfilled; or
- the storing module 142 in an emergency case where an overflow of the buffer 142A would be imminent (in which case the reinforcement learning agent component 144 would be penalized for bad recording buffer management); or
- when the recording data is unhealthy (this can happen when a sensor data stream would be corrupted).

As shown in figure 1, the host collecting system 200 can include a server. It has a first interface 210, connected to the mobile communication network 300, to interface with the fleet of recording vehicles 100 over-the-air, through the mobile communication network 300 and a second interface 220 to interface with a storage infrastructure 400.

The first interface 210 is connected to the mobile network 300.

The second interface 220 is connected to the storage infrastructure 400.

The storage infrastructure 400 can be any type of storage system suitable to store a large amount of data. In an embodiment, the storage infrastructure 400 has computer resources for storing the data for example in a cloud. It can also a formatting module responsible for the formatting of data for storage.

The storage infrastructure 400 can be external to the host collecting system 200 or internal to the host collecting system 200.

In addition, the host collecting system 200 has hardware means and software means (in other words: hardware components and software components) to execute the steps of the second method of collecting data from the fleet of vehicles, carried out by the host collecting system 200, that will be described later. In an embodiment, the hardware means and software means include a data collection management module 230 and a control processing unit (or processor) 240.

The data collection management module 230 is a software component running on the CPU 240. It has a target provider 231 for providing a data collection target $T_0$ and, in some embodiments, for updating the current data collection target.

The data collection management module 230 can also include a reward generator 232 responsible for computing a virtual value for a recording data snippet uploaded from a recording vehicle 100 based on the data collection target, calculating a reward value depending on said virtual value, and downloading said reward value to said recording vehicle 100 over-the-air, through the mobile network 300.

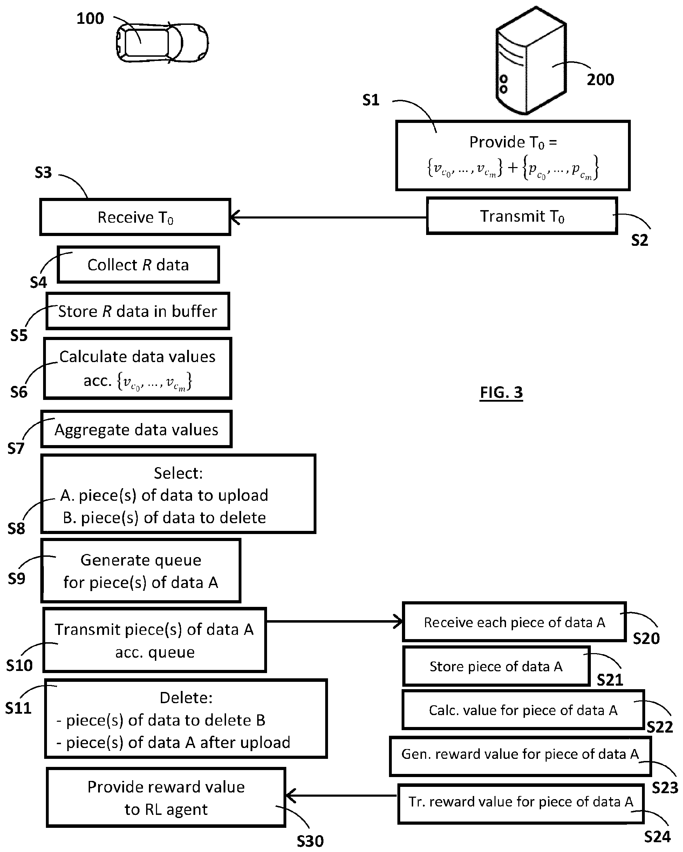

A first method of collecting data from a recording vehicle 100 while the vehicle 100 is driving and uploading over-the-air at least part of the collected data to the host data collecting system 200, carried out by the vehicle data recording device 140 in the vehicle 100, and a second method of collecting data from the fleet of recording vehicles 100, carried out by the host collecting system 200, will now be described with reference to figure 3, according to a specific embodiment. The first method of collecting is described below for one of the recording vehicles 100. All the recording vehicles 100 carry out a similar first method.

In an initial step S1, the data collection management module 230 of the host collecting system 200 provides an initial data collection target $T_0$. The data collection target $T_0$ includes m+1 data value metrics $v_{c_j}$ for assigning data values to the recording data over time, so as to measure a progress in achieving m+1 corresponding atomic (individual) collection targets $c_j$, $j$ ranging from 0 to m. The set of m+1 corresponding atomic collection targets $\{c_0, ... , c_m\}$ is noted C. In the presently described embodiment, the data value metrics $v_{c_j}$ are normalized and attribute values in the range [0, ..., 1]. Furthermore, the data collection target $T_0$ includes a collection policy P attributing respective weights $p_{c_j}$ to the data value metrics $v_{c_j}$. The sum of the m+1 weights $p_{c0}$, $p_{c1}$, ... , $p_{cm}$ is equal to 1. The host collecting system 200 stands like a file containing the data value metrics $v_{c_j}$ and the collection policy P.

In a step S2, the host collecting system 200 transmits the initial data collection target $T_0$ to the fleet (or the plurality) of recording vehicles 100 over-the-air, through the mobile communication network 300. In an embodiment, the data collection target $T_0$ is transmitted to each recording vehicle 100 upon request from the vehicle 100.

In a step S3, in the vehicle 100, the vehicle data recording device 140 downloads (in other words: receives) the data collection target $T_0$ from the host collecting system 200 through the mobile network 300. In the present embodiment, the data collection target $T_0$ is received via the radio transmitter-receiver 120 of the vehicle 100 and the I/O interface 141 of the recording device 140.

In a step S4, the vehicle data recording device 140 collects (in other words: receives) data from data sources in the vehicle 100 over time while the vehicle 100 is driving along a path. The collection of data over time forms a recording R.

As the data from the data sources in the vehicle 100 is being received by the vehicle data recording device 140, the received data is stored in the storing module 142 (here, in the buffer memory 142A) in a step S5.

In a step S6, the value calculation component 147 computes the data values of the recording data recorded in the memory 142A over time, according to the data value metrics $v_{c_j}$ with j ranging from 0 to m. The outcome of the computation S6 includes m+1 sets $V_{c_j}(t)$ of data values of the recording data over time, according to the m+1 metrics $v_{c_j}$ respectively. Figure 5 a), b) and c) shows an example of three sets of data values according to a metric 1, a metric 2 and a metric 3. As an illustrative and non-limitative example, the metric 1 relates to an atomic collection target $c_1$ consisting of a number X1 of pedestrians, the metric 2 relates to an atomic collection target $c_2$ consisting of a number X2 of bikes, and the metric 3 relates to an atomic collection target $c_3$ consisting of a number X3 of cars.

In a step S7, the calculation component 147 aggregates the m+1 sets of data values $V_{c_j}(t)$, according to the collection policy P by calculating a weighted sum of the m+1 sets of data values $V_{c_j}(t)$, to compute global data values of the recording data over time, noted $V_{C,P}(t)$.

Based on the data value metrics $v_{c_j}$ and the collection policy P, the vehicle 100 computes every single one of the metrics to obtain atomic data values, as illustratively shown in figure 5 a), b) and c), combine (aggregate) the computed values by a weighted sum and come up with an overall (aggregated) value, as shown in figure 5 d), for the recording R at each point i in time.

In the steps S3 to S7, the data recording device 140 in the vehicle 100 downloads the collection policy P and the data value metrics $c_j$, for example as code to be executed. The data value metrics $c_j$ are then run in the vehicle 100 to come up with the data values according to different metrics over time, in a normalized way. Values between 0 (not interesting, very low value) and 1 (very interesting, very high value) over time are assigned to the recording data points for each point i in time. All individual data value metrics $c_j$ are computed in the vehicle 100, then weighted by the policy P to obtain aggregated data values over time, which evaluates the recording R inside the vehicle 100.

In a selection step S8 of the first method, the reinforcement learning agent component 144 decides decide on if to upload or delete piece(s) of recording data and selects one recording data snippet for upload or delete.

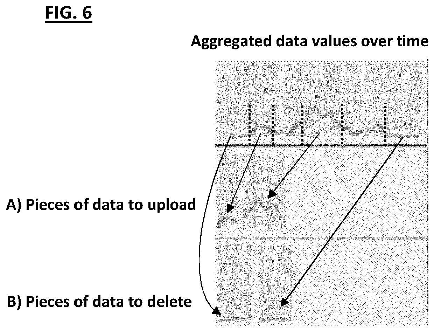

The decision and selection of recording data snippets (to upload and/or to delete) is performed on the basis of the data values calculated in the steps S6 and S7, preferably on the basis of the aggregated data values $V_{C,P}(t)$. In the present embodiment, each recording data snippet is continuous and defined by a time window between a minimum length and a maximum length. Furthermore, the different selected data snippets do not overlap. Figure 6 shows examples of recording data snippets of high value, to upload (pieces of data A), and recording data snippets of low value, to delete (pieces of data B).

A recording data snippet to upload includes a piece of recording data of high value within a time window. For example, a value threshold is fixed and a sub-selection of the recording buffer for uploading is performed based on the fixed value threshold. Alternatively, no value threshold is fixed, but the most valuable x% of the data are selected for upload (for example x=20%), independent of its absolute recording value. More generally, the snippet forming algorithm can be considered as a black box extracting candidate snippets for uploading. The RL agent can decide on snippet content, value and duration for prioritizing snippets.

In case that all the recording data is of high value, it is integrally uploaded. In other words, in such a case, the reinforcement learning agent component 144 selects all the recording data R to upload.

A recording data snippet to delete includes a piece of recording data of low value within a time window. The selection of the recording data snippets to delete can be made in an analogous way (as mentioned above). In case that the storing capacity of the data recording device 140 is sufficient, it may be decided not to delete any piece of recording data (if the data is of high enough value). The data of low value are preferable deleted because it costs money and computational means and efforts to keep and process it.

After the selection step S8, some pieces of data of the data recording R do not belong to any of the recording data snippets to upload or to delete. They can remain preliminary in the recording buffer. Even though they might not be valuable enough for direct upload due to 5G bandwidth limitations, they might still be candidates in the future for uploading, in case only low value data are recorded in the near future of the recording drive. The data remaining in the recording buffer after a recording drive is still of value and can be uploaded afterwards. Therefore, the RL agent should also be rewarded for keeping valuable data in the recording buffer. The RL agent only needs to prevent a buffer overflow. Therefore, it needs to delete snippets of low value. This is encouraged by penalizing the RL agent heavily for buffer overflows.

The reinforcement learning agent module 144 makes decision on (in other words: determines) what to upload and what to delete. In an embodiment, it can also consider other factors like the network availability, traffic, weather, or any other information related to the circumstances and/or environment of the vehicle 100, that are relevant to make decisions. The vehicle 100 has a limited capacity to save recording data and a limited capacity to process and compute. In addition, due to the limited available bandwidth in the mobile network 300, it is not possible to upload the very large amount of recording data, from the fleet of recording vehicles 100 to the host collecting system 200, in real time or almost in real time. The recording vehicle 100 determines what data to buffer and what data to discard. This decision is made by the reinforcement learning agent component 144. Alternatively, it could be made by another type of algorithm or any method evaluating the data for every point in time to get a picture on where are the interesting time windows that are opportunities for saving and uploading data.

The steps S6 to S8 can be performed in real time, or almost in real time, when the recording data are being collected and stored in the memory 142A.

In the step S8, the reinforcement learning agent 144 outputs a decision to or not to upload / delete and a first information on the recording data snippets to upload and, optionally, a second information on the recording data snippets to delete. The first information is provided as input to the transmission priority queue component 148. The second information is provided as input to the garbage collector component 149.

Optionally, the transmission priority queue component 148 generates and manages (in others words: controls) a transmission priority queue of the recording data snippets to upload, in a step S9, and controls the transmission of said recording data snippets to upload over-the-air, according to the priority queue, in a step S10. The priority queue is optional. In the step S9, the component 148 can calculate the value density of each recording data snippet to upload (in other words: the data value per unit of time) and create the transmission priority queue by ordering the recording data snippets to upload based on their respective value densities. Thus, the ordering of the recording data snippets to upload is based on the respective data value densities of the recording data snippets. The recording data snippets to upload are transmitted in the order of the queue to the host collecting system 200 over-the-air, through the mobile communication network 300, here via the transmitter-receiver 120 in the vehicle 100, in the step S10.

In a step S11, under control of the garbage collector component 149, the recording data snippets to delete are deleted from the memory 142A.

In addition, in the step S11, after successfully transmitting each recording data snippet to upload, the uploaded recording data snippet can be deleted from the memory 142A under control of the garbage collector component 149.

In a step S20, the host collecting system 200 receives the successfully uploaded recording data snippets from the recording vehicle 100. In a step S21, the host collecting system 200 stores the received recording data snippets into the storing infrastructure 400.

In a step S22, the reward generator 232 computes a virtual value for each recording data snippet uploaded from the vehicle 100 based on the data collection target $T_0$. The virtual value of the recording data snippet can be a value density of the recording data snippet. Alternatively, the virtual value of the recording data snippet could be computed using the expression (1) applied to the recording data snippet.

Then, in a step S23, the reward generator 232 can generate a reward value for the uploaded recording data snippet, depending on its virtual value. For example, the reward value includes a first reward portion that is proportional to the value density of the uploaded recording data snippets. In addition, the reward value can further include a second reward portion corresponding to a continuous small reward rewarding the process of uploading recording data snippets.

The reward value generated in the step S23 is downloaded from the host collecting system 200 to the vehicle 100 over-the-air, through the mobile communication network 300, in a step S24.

The vehicle data recording device 140 receives the downloaded reward value (here via the transmitter-receiver 120 of the vehicle 100) and, in a step S30, provides the received reward value to the local reinforcement learning agent component 144, as a reward input for learning. Thanks to that, the reinforcement learning agent component 144 performs better and better the tasks of selecting recording data snippets to upload and uploading them.

As the vehicle 100 drives along, all the collected data can be new training data for an improvement of the reinforcement learning agent component 144. The more the vehicle 100 drives around, the more efficient is the reinforcement learning agent component 144. For example, the reinforcement learning agent component 144 can learn the correlation that school buses only occur at school time, or that children can be detected at specific times (on the way to school or from school).

The reinforcement learning agent component 144 is initially trained to manage the recording buffer 142A and effectively decide if a pre-selected recording data snippet should be uploaded, or optionally deleted, or if no action should be taken. The training is performed to make sure that the data recording device 140 uploads valuable recording data snippets, keep relevant recording data snippets in the buffer 142A, prevents buffer overflows and optionally delete low value or defective recording data. The training can use historic recording data similar to the recording data used in inference mode, as input training data, reward functions to determine the different types of rewards/penalties as previously described, and output training data including the different types of rewards/penalties determined by the reward functions.

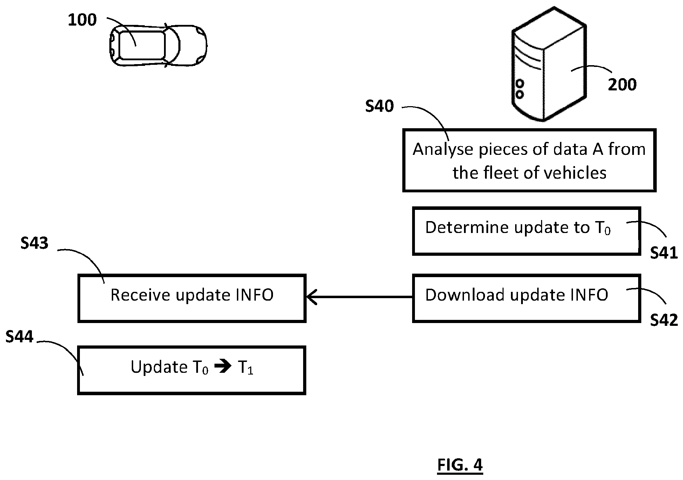

The collection target $T_0$ can be updated by the host collecting system 200. Figure 4 illustrates the process of updating the collection target $T_0$, according to an embodiment. As the host collecting system 200 collects pieces of data from the fleet of vehicles 100, selected based on the collection target $T_0$, the decision to update the data collection target $T_0$ is taken by the host collecting system 200 depending on the recording data already received from the fleet of recording vehicles 100. The update of the current data collection target $T_0$ reflects the fact that the intrinsic value of the pieces of recording data (here the recording data snippets) related to one or more specific atomic collection targets changes over time. Indeed, the value of a piece of data related to a given atomic collection target can be expected to be high, when such piece of data is scarce and in high demand for collection, but becomes lower as other similar pieces of data related to the same atomic collection target have already been collected by the host collecting system 200. In a first illustrative example, the initial collection target $T_0$ includes a first atomic collection target $c_0$ consisting of a number $X_0$ of pedestrians and a second atomic collection target $c_1$ consisting of a number $X_1$ of bikes. If, after a while, the host collecting system 200 has already received many pedestrians but few bikes in the uploaded pieces (snippets) of recording data from the fleet of vehicles 100, the host collecting system 200 may decide to decrease the weight $p_{c_0}$ of the first atomic collection target $c_0$ and increase the weight $p_{c_1}$ of the second atomic collection target $c_1$ in an updated collection target $T_1$. In a second illustrative example, the initial collection target $T_0$ includes a first atomic collection target $c_0$ consisting of a number X of cars. If, after a while, the host collecting system 200 has already received many cars in the uploaded pieces of recording data from the fleet of vehicles 100, the host collecting system 200 may decide to add a constraint to the first atomic collection target $c_0$, for example a constraint on the type of car to collect so as to collect only rare cars. Alternatively, the data value metrics themselves can model the above described behaviour.

The update of the collection target $T_0$ consists in modifying one or more components of the collection target $T_0$, depending on the pieces of recording data already collected from the recording vehicles 100. For example, the collection policy P can be updated. Alternatively, or additionally, one or more atomic data value metrics $v_{cj}$ can be taken out from the current collection target $T_0$ and/or one or more new atomic data value metrics $v_{cj}$ can be added into the current collection target $T_0$. Thus, the update can include, in a non-limitative manner, one or more of the following changes:

- the modification of some weights $\{p_{c_0}, \dots, p_{c_m}\}$ of atomic collection target $\{c_0, \dots, c_m\}$,
- the addition of a constraint related to a specific atomic collection target $c_j$;
- the addition of a new atomic collection target $c_{m+1}$ ;
- the deletion of an atomic collection target $c_j$.

In order to update the current data collection target $T_0$, the host collection system 200 analyses the recording data snippets already received from the fleet of vehicles 100 to follow the progress towards the current collection target $T_0$. Then, in a step S41, the host collecting system 200 determines one or more changes to apply to the current collection target $T_0$, based on the analysis in the step S41. In other words, the host collecting system 200 determines an update to apply to the current collection target $T_0$. For example, the host collecting system 200 modifies some of the weights $\{p_{c_0}, \dots, p_{c_m}\}$ of the atomic collection targets $\{c_0, \dots, c_m\}$.

In a step S42, the host collecting system 200 downloads an update information to the fleet of vehicles 100 to notify the update of the collection target $T_0$. For example, the update information includes the new collection policy or the new weights.

In a step S43, the data recording device 140 downloads over-the-air and receives the update information, via the transmitter-receiver 120 in the vehicle 100, and, in a step S44, updates the data collection target $T_0$ stored in the memory 146, according to the update information. After the update, the new data collection target stored in memory 146 is $T_1$.

After updating the collection target, the data recording device 140 continues carrying out the steps S4 to S11 and S30-S31 using the updated collection target $T_1$. The host collecting system collects new recording data snippets from the fleet of vehicles 100 and rewards the vehicles 100, in the steps S20 to S24, based on the updated collection target $T_1$.

The process of updating the data collection target can be executed one or more times. An update of the collection target can be performed every so often, when needed.

In another embodiment, the vehicle data recording device 140 further includes a path or route planning function 151 as shown in figure 2. The function of path (route) planning can be integrated in the reinforcement learning agent component 144.

The path planning function 151 has two components: the first component is a route encoder and the second component is a route selector. The first component (route encoder) is responsible for determining a plurality of possible paths or routes and computing path or route encodings. A route (path) encoding can be represented by a vector of numerical values encoding value information of the route for a plurality of metrics. The second component (route or path selector) is responsible for deciding whether or not to change a current route (when appropriate) and, when it is decided to change the route, selecting a route (path) among a list of routes associated with route encodings determined by the route encoder, in order to optimize (in other words: maximize) rewards (which also means minimize penalties) received for the host data collecting system 200 during or after an upload of recording data. Optionally, a route preselector could pre-select a limited number of routes the reinforcement learning agent has to decide between.. In an embodiment, the route selector executes the task of selecting a route by reinforcement learning. The route selector can take into account an additional environment information that is independent of the routes. The term "independent" means here independent of the static route features in contrast to dynamic features like weather, etc.. The route selector is rewarded for uploading information. It might be very interested in having 5G band availability, to optimize its function.

In an embodiment, the route encoder and the route selector are software running on a processor to execute the following steps, performed after downloading a data collection target :

at a current time $t_0$, determining a plurality of routes (paths) that the vehicle 100 can take;
for each route, generating a route encoding that encodes in numerical values an information on predicted values of said route for a plurality of metrics,
providing the route encodings and additional environmental information that is independent of the routes to the reinforcement learning agent that is operable for deciding whether or not to change a current route and, in case that a change of route is decided, select one of the determined routes, in order to optimize a reward;
recording data from data sources in the vehicle over time while the vehicle drives along the selected route (either the current route when it is decided not to change the route, or the route selected among the new determined routes);
uploading at least part of the recording data to the host data collecting system 200 and, in return, receiving a reward from the host data collecting system 200;
providing the reward to the reinforcement learning agent.

The planning of paths allows to improve the amount of recording data of high value.

## Claims

1. A method of collecting data from a vehicle (100) and uploading over-the-air at least part of the collected data to a host data collecting system (200), including the following steps, carried out by a vehicle data recording device (140) in the vehicle (100):

    a) downloading (S3) a data collection target $(T_0)$ from the host data collecting system (200) over-the-air, said data collection target $(T_0)$ including a data value metric $(v_{c_j})$ that is a function assigning a data value to a piece of data corresponding to a given point in time, said data value representing an amount of progress in achieving an atomic collection target $(c_j)$;
    b) collecting (S4) data from data sources (110) in the vehicle (100) over time while the vehicle (100) is driving;
    c) recording (S5) the collected data in a storing module (142) of the vehicle data recording device (140);
    d) computing (S6) the data values of the recording data over time, according to the data value metric $(v_{c_j})$;
    e) selecting (S8) from the recording data (R), by a reinforcement learning agent component (144), at least one recording data snippet of high value within a time window, based on the computed data values;
    f) uploading (S10) only the at least one selected recording data snippet of high value to the host data collecting system (200) over-the-air;
    g) receiving (S30) a reward value from the host data collecting system (200), after successfully uploading the at least one recording data snippet of high value;
    h) providing (S31) the received reward value to the reinforcement learning agent component (144) of the vehicle data recording device (140) , as a reward input.

2. The method according to claim 1, further including:

selecting (S8), from the recording data, at least one data snippet of low value, to delete, within a time window, based on the computed data values;

deleting (S11) the at least one data snippet of low value from the storing module (146).

3. The method according to claim 1 or 2, wherein, the data collection target $(T_0)$ including m+1 data value metrics $(\{v_{c_0}, ..., v_{c_m}\})$ related to different atomic collection targets $(\{c_0, ..., c_m\})$, with $m \geq 0$, and a collection policy (P) defining m+1 respective weights $(\{p_{c_0}, ..., p_{c_m}\})$ for the m+1 data value metrics $(\{v_{c_0}, ..., v_{c_m}\})$, the method further includes the steps of

computing (S6) m+1 sets of data values of the recording data over time, according to the m+1 data value metrics $(\{v_{c_0}, ..., v_{c_m}\})$ respectively; and

aggregating (S7) the m+1 sets of data values, according to the collection policy $(T_0)$ by calculating a weighted sum of the m+1 sets of data values, to compute aggregated data values of the recording data over time,

and wherein selecting (S8) a recording data snippet is performed based on the aggregated data values of the recording data over time.

4. The method according to any of claims 1 to 3, further including steps of downloading (S43) an update information of the data collection target $(T_1)$ from the host collecting system (200) over-the-air, and updating (S44) the data collection target according to the update information.

5. The method according to any of claims 1 to 4, wherein, in case that a plurality of recording data snippets to upload are selected from the recording data, the method further includes the steps of:

calculating (S10) a value density for each recording data snippet to upload, the value density of a piece of data corresponding to the value of the piece data per unit of time ;

putting (S10) the plurality of recording data snippets to upload in a transmission priority queue and ordering said recording data snippets to upload in the transmission priority queue based on said value density.

6. The method according to any of claims 1 to 5, further including the steps of:

at a current time $t_0$, determining a plurality of routes that the vehicle (100) can take;

for each route, generating a route encoding that encodes in numerical values an information on predicted values of said route for a plurality of metrics,

providing the route encodings and additional environmental information that is independent of the routes to the reinforcement learning agent that decides whether or not to change a current route and, when appropriate, selects one of the determined routes, in order to optimize a reward;

recording data from data sources in the vehicle over time while the vehicle drives along the selected route;

uploading at least part of the recording data to the host data collecting system (200) and, in return, receiving a reward from the host data collecting system (200);

providing the reward to the reinforcement learning agent.

7. A method of collecting data from a fleet of recording vehicles (100), carried out by a host collecting system (200) connected to the fleet of vehicles (100) over-the-air, including the steps of

at a data collection management module (230), providing (S1) a data collection target $(T_0)$, said data collection target $(T_0)$ including a data value metric $(v_{c_j})$ that is a function assigning a data value to a piece of data at a given point in time (i), said data value representing an amount of progress in achieving an atomic collection target $(c_j)$;;

downloading (S2) the data collection target $(T_0)$ to the fleet of recording vehicles (100) over-the-air;

receiving (S20) recording data snippets from the fleet of vehicles (100) over-the-air;

storing (S21) the received data snippets into a storage infrastructure (400);

computing (S22) a virtual value for a recording data snippet uploaded from a vehicle (100) of the fleet based on the data collection target $(T_0)$,

generating (S23) a reward value depending on said virtual value, and

downloading (S24) said reward value to said vehicle (100) for the purpose of rewarding a reinforcement learning agent component (144) of the vehicle, that is (100) responsible for selecting recording data snippets of high value.

8. The method according to claim 7, wherein, in the step (S1) of providing a data collection target $(T_0)$, the data collection management module (230) provides m+1 data value metrics $(\{v_{c_0}, ..., v_{c_m}\})$ related to different atomic collection targets $(\{c_0, ..., c_m\})$, with $m \geq 0$, and a collection policy (P) defining m+1 respective weights $(\{p_{c_0}, ..., p_{c_m}\})$ for the m+1 data value metrics ($\{v_{c_0}, \ldots, v_{c_m}\}$).

9. The method according to claim 7 or 8, further including the following steps:

   at the data collection management module (230), updating (S40-S41) said data collection target ($T_0$) depending on the recording data snippets already received from the fleet of vehicles (100), and
   downloading (S42) an update information of said data collection target ($T_0$) to the fleet of vehicles (100) over-the-air.

10. The method according to any of claims 7 to 9, wherein the data value metrics are generated so as to assign normalized data values.

11. A vehicle data recording device (140), including

   at least one interface (141) to receive recording data from data sources in the vehicle (100) and transmit recording data snippets to upload to a host data collecting system (200) over-the-air;
   a storing module (142) for storing the recording data;
   means adapted to execute the steps of the method according to any of claims 1 to 6.

12. A vehicle (100) including the vehicle data recording device (140) according to claim 11.

13. A host data collecting system (200), including

   a first interface (210) to interface with a fleet of recording vehicles (100) over-the-air;
   a second interface (220) to interface with a storage infrastructure (400);
   and means adapted to execute the steps of the method according to any of claims 7 to 10.

**Patentansprüche**

1. **Verfahren** zum Erfassen von Daten aus einem Fahrzeug (100) und Over-the-Air-Upload mindestens eines Teils der erfassten Daten in ein Host-Datenerfassungssystem (200), einschließlich der folgenden Schritte, die von einem Fahrzeugdaten-Aufzeichnungsgerät (140) in dem Fahrzeug (100) ausgeführt werden:

   a) Over-the-Air-Download (S3) eines Datenerfassungsziels ($T_0$) von dem Host-Datenerfassungssystem (200), wobei das Datenerfassungsziel ($T_0$) eine Datenwertmetrik ($v_{c_j}$) einschließt, die eine Funktion ist, die einem Datenelement, das einem bestimmten Zeitpunkt entspricht, einen Datenwert zuordnet, wobei der Datenwert eine Fortschrittsmenge beim Erreichen eines atomaren Erfassungsziels ($c_j$) darstellt;
   b) Erfassen (S4) von Daten von Datenquellen (110) in dem Fahrzeug (100) über die Zeit, wenn das Fahrzeug (100) in Bewegung ist;
   c) Aufzeichnen (S5) der erfassten Daten in einem Speichermodul (142) des Fahrzeugdaten-Aufzeichnungsgeräts (140);
   d) Berechnen (S6) der Datenwerte der Aufzeichnungsdaten über die Zeit, nach der Datenwertmetrik ($v_{c_j}$);
   e) Auswählen (S8) aus den Aufzeichnungsdaten (R), über eine Komponente eines verstärkenden Lernagenten (144), mindestens eines hochwertigen Aufzeichnungsdaten-Snippets innerhalb eines Zeitfensters, basierend auf den berechneten Datenwerten;
   f) Over-the-Air-Upload (S10) nur des mindestens einen ausgewählten hochwertigen Aufzeichnungsdaten-Snippets in das Host-Datenerfassungssystem (200);
   g) Empfangen (S30) eines Belohnungswerts von dem Host-Datenerfassungssystem (200), sobald das mindestens eine hochwertige Aufzeichnungsdaten-Snippet erfolgreich hochgeladen wurde;
   h) Bereitstellen (S31) des empfangenen Belohnungswerts an die Komponente eines verstärkenden Lernagenten (144) des Fahrzeugdaten-Aufzeichnungsgeräts (140), als eine Belohnungseingabe.

2. Verfahren nach Anspruch 1, das ferner Folgendes einschließt:

   Auswählen (S8) aus den Aufzeichnungsdaten mindestens eines geringwertigen Daten-Snippets, um es innerhalb eines Zeitfensters, basierend auf den berechneten Datenwerten, zu löschen;
   Löschen (S11) des mindestens einen geringwertigen Daten-Snippets aus dem Speichermodul (146).

3. Verfahren nach Anspruch 1 oder 2, wobei das Datenerfassungsziel ($T_0$) m+1 Datenwertmetriken ($\{v_{c_0},...,v_{c_m}\}$) einschließt, die mit den verschiedenen atomaren Erfassungszielen ($\{c_0,...,c_m\}$) verbunden sind, mit $m \geq 0$, und einer Erfassungsrichtlinie (P), die m+1 entsprechende Gewichte ($\{p_{c_0},...,p_{c_m}\}$) für die m+1 Datenwertmetriken ($\{v_{c_0},...,v_{c_m}\}$) definiert, wobei das Verfahren ferner die folgenden Schritte einschließt

Berechnen (S6) von m+1 Datenwertsätzen der Aufzeichnungsdaten über die Zeit, jeweils gemäß den m+1 Datenwertmetriken ($\{v_{c_0},...,v_{c_m}\}$); und
Verbinden (S7) der m+1 Datenwertsätze, gemäß der Erfassungsrichtlinie ($T_0$), durch Berechnen einer gewichteten Summe der m+1 Datenwertsätze, um aggregierte Datenwerte der Aufzeichnungsdaten über die Zeit zu berechnen,
und wobei das Auswählen (S8) eines Aufzeichnungsdaten-Snippets, basierend auf den aggregierten Datenwerten der Aufzeichnungsdaten über die Zeit, ausgeführt wird.

4. Verfahren nach einem der Ansprüche 1 bis 3, das ferner Schritte zum Over-the-Air-Download (S43) von aktualisierten Informationen des Datenerfassungsziels ($T_1$) aus dem Host-Erfassungssystem (200) einschließt, und das Aktualisieren (S44) des Datenerfassungsziels gemäß den aktualisierten Informationen.

5. Verfahren nach einem der Ansprüche 1 bis 4, wobei für den Fall, dass eine Vielzahl von hochzuladenden Aufzeichnungsdaten-Snippets aus den Aufzeichnungsdaten ausgewählt werden, das Verfahren ferner die folgenden Schritte einschließt:

Berechnen (S10) einer Wertdichte für jedes hochzuladende Aufzeichnungsdaten-Snippet, wobei die Wertdichte eines Datenelements dem Wert des Datenelements pro Zeiteinheit entspricht;
Einreihen (S10) der Vielzahl von hochzuladenden Aufzeichnungsdaten-Snippets in eine Vorrangwarteschlange und Ordnen der hochzuladenden Aufzeichnungsdaten-Snippets in der Vorrangwarteschlange, basierend auf der Wertdichte.

6. Verfahren nach einem der Ansprüche 1 bis 5, das ferner die folgenden Schritte einschließt:

In einer aktuellen Zeit $t_0$, Bestimmen einer Vielzahl von Strecken, die das Fahrzeug (100) nehmen kann;
für jede Strecke, Erzeugen einer Streckencodierung, die eine Information zu vorhergesagten Werten der Strecke für eine Vielzahl von Metriken in Zahlenwerten codiert,
Bereitstellen der Streckencodierungen und zusätzlicher Umgebungsinformationen, die unabhängig von der Strecke sind, an den verstärkenden Lernagenten, der entscheidet, ob eine aktuelle Strecke geändert werden soll oder nicht, und, gegebenenfalls, eine der bestimmten Strecken auswählt, um eine Belohnung zu optimieren;
Aufzeichnen von Daten aus Datenquellen in dem Fahrzeug über die Zeit, wenn das Fahrzeug auf der ausgewählten Strecke fährt;
Hochladen mindestens eines Teils der Aufzeichnungsdaten in das Host-Datenerfassungssystem (200) und im Gegenzug Empfangen einer Belohnung von dem Host-Datenerfassungssystem (200);
Bereitstellen der Belohnung an den verstärkenden Lernagenten.

7. Verfahren zum Erfassen von Daten von einer Flotte von Aufzeichnungsfahrzeugen (100), das von einem Host-Erfassungssystem (200) ausgeführt wird, das mit der Fahrzeugflotte (100) über eine Over-the-Air-Verbindung verbunden ist, einschließlich der folgenden Schritte:

An einem Datenerfassungs-Managementmodul (230), Bereitstellen (S1) eines Datenerfassungsziels ($T_0$), wobei das Datenerfassungsziel ($T_0$) eine Datenwertmetrik ($v_{c_j}$) einschließt, die eine Funktion ist, die einem Datenelement zu einem bestimmten Zeitpunkt (i) einen Datenwert zuordnet, wobei der Datenwert eine Fortschrittsmenge beim Erreichen eines atomaren Erfassungsziels ($c_j$) darstellt;
Over-the-Air-Download (S2) des Datenerfassungsziels ($T_0$) in die Flotte von Aufzeichnungsfahrzeugen (100);
Empfangen (S20) von Aufzeichnungsdaten-Snippets von der Fahrzeugflotte (100) über eine Over-the-Air-Verbindung;
Speichern (S21) der empfangenen Daten-Snippets in einer Speicherinfrastruktur (400);
Berechnen (S22) eines virtuellen Werts für ein Aufzeichnungsdaten-Snippet, das von einem Fahrzeug (100) der Flotte, basierend auf dem Datenerfassungsziel ($T_0$), hochgeladen wurde, Erzeugen (S23) eines Belohnungswerts, abhängig von dem virtuellen Wert, und Herunterladen (S24) des Belohnungswerts in das Fahrzeug (100), um eine Komponente eines verstärkenden Lernagenten (144) des Fahrzeugs zu belohnen, das (100) für das Auswählen von hochwertigen Aufzeichnungsdaten-Snippets verantwortlich ist.

8. Verfahren nach Anspruch 7, wobei in Schritt (S1) zum Bereitstellen eines Datenerfassungsziels ($T_0$) das Daten-erfassungs-Managementmodul (230) m+1 Datenwertmetriken ($\{v_{c_0}, ..., v_{c_m}\}$) bereitstellt, die mit den verschiedenen atomaren Erfassungszielen ($\{c_0, ..., c_m\}$) verbunden sind, mit m≥0, und einer Erfassungsrichtlinie (P), die m+1 entsprechende Gewichte ($\{p_{c_0}, ..., p_{c_m}\}$) für die m+1 Datenwertmetriken ($\{v_{c_0}, ..., v_{c_m}\}$) definiert.

9. Verfahren nach Anspruch 7 oder 8, das ferner die folgenden Schritte einschließt:

   Im Datenerfassungs-Managementmodul (230), Aktualisieren (S40-S41) des Datenerfassungsziels ($T_0$), ab-hängig von den Aufzeichnungsdaten-Snippets, die bereits von der Fahrzeugflotte (100) empfangen wurden, und Over-the-Air-Download (S42) einer aktualisierten Information zu dem Datenerfassungsziel ($T_0$) in die Flotte von Fahrzeugen (100).

10. Verfahren nach einem der Ansprüche 7 bis 9, wobei die Datenwertmetriken erzeugt werden, um normalisierte Datenwerte zuzuordnen.

11. Fahrzeugdaten-Aufzeichnungsgerät (140), das

    mindestens eine Schnittstelle (141) einschließt, um Aufzeichnungsdaten von Datenquellen in dem Fahrzeug (100) zu empfangen und Aufzeichnungsdaten-Snippets zu übertragen, um sie in ein Host-Datenerfassungssystem (200) über eine Over-the-Air-Verbindung hochzuladen; Speichermodul (142) für das Speichern der Aufzeichnungsdaten;
    Hilfsmittel, das so angepasst ist, dass es die Schritte des Verfahrens nach einem der Ansprüche 1 bis 6 ausführt.

12. Fahrzeug (100), das das Fahrzeugdaten-Aufzeichnungsgerät (140) nach Anspruch 11 einschließt.

13. Host-Datenerfassungssystem (200), das

    eine erste Schnittstelle (210) einschließt, um sie mit einer Flotte von Aufzeichnungsfahrzeugen (100) über eine Over-the-Air-Verbindung zu koppeln;
    eine zweite Schnittstelle (220), um sie mit einer Speicherinfrastruktur (400) zu koppeln;
    und ein Hilfsmittel, das so angepasst ist, dass es die Schritte des Verfahrens nach einem der Ansprüche 7 bis 10 ausführt.

**Revendications**

1. Procédé de collecte de données à partir d'un véhicule (100) et de téléchargement vers l'amont d'au moins une partie des données collectées vers un système de collecte de données hôte (200), comprenant les étapes suivantes, exécutées par un dispositif d'enregistrement de données de véhicule (140) dans le véhicule (100) :

   a) le téléchargement (S3) d'une cible de collecte de données ($T_0$) à partir du système de collecte de données hôte (200) par liaison radio, ladite cible de collecte de données ($T_0$) comportant une métrique des valeurs de données ($v_{c_j}$) qui est une fonction attribuant une valeur de données à une donnée correspondant à un instant donné, ladite valeur de données représentant un progrès dans la réalisation d'une cible de collecte atomique ($c_j$) ;
   b) la collecte (S4) des données provenant de sources de données (110) dans le véhicule (100) au fil du temps pendant que le véhicule (100) roule ;
   c) l'enregistrement (S5) les données collectées dans un module de mémorisation (142) du dispositif d'enregistrement de données du véhicule (140) ;
   d) le calcul (S6) des valeurs de données des données d'enregistrement au fil du temps, en fonction de la métrique des valeurs de données ($v_{c_j}$) ;
   e) la sélection (S8) à partir des données d'enregistrement (R), par un composant d'agent d'apprentissage de renforcement (144), d'au moins un extrait de données d'enregistrement de valeur élevée dans une fenêtre temporelle, en fonction des valeurs de données calculées ;
   f) le téléchargement vers l'amont (S10) uniquement dudit au moins un extrait de données d'enregistrement sélectionné de valeur élevée vers le système de collecte de données hôte (200) par liaison radio ;
   g) la réception (S30) d'une valeur de récompense provenant du système de collecte de données hôte (200), après avoir téléchargé vers l'amont avec succès ledit au moins un extrait de données d'enregistrement de valeur élevée ;

h) la fourniture (S31) de la valeur de récompense reçue au composant d'agent d'apprentissage de renforcement (144) du dispositif d'enregistrement de données de véhicule (140), en tant qu'entrée de récompense.

2. Procédé selon la revendication 1, comportant en outre :

la sélection (S8) à partir des données d'enregistrement, d'au moins un extrait de données d'enregistrement de valeur élevée, à supprimer, dans une fenêtre temporelle, en fonction des valeurs de données calculées ; la suppression (S11) dudit au moins un extrait de données de faible valeur provenant du module de stockage (146).

3. Procédé selon la revendication 1 ou 2, dans lequel, la cible de collecte de données ($T_0$) comportant m+1 métriques de valeurs de données ($\{v_{c_0}, ..., v_{c_m}\}$) liées à différentes cibles de collecte atomique ($\{c_0, ..., c_m\}$), avec m$\geq$0, et une politique de collecte (P) définissant m+1 pondérations respectives ($\{p_{c_0}, ..., p_{c_m}\}$) pour les m+1 métriques de valeurs de données ($\{v_{c_0}, ..., v_{c_m}\}$), le procédé comprend en outre les étapes de calcul (S6) des m+1 ensembles de valeurs de données des données d'enregistrement au fil du temps, conformément aux m+1 métriques de valeurs de données ($\{v_{c_0}, ..., v_{c_m}\}$) respectivement ; et

l'agrégation (S7) des m+1 ensembles de valeurs de données, conformément à la politique de collecte ($T_0$) en calculant une somme pondérée des m+1 ensembles de valeurs de données, pour calculer les valeurs de données agrégées des données d'enregistrement au fil du temps, et dans lequel la sélection (S8) d'un extrait de données d'enregistrement est réalisée en fonction des valeurs de données agrégées des données d'enregistrement au fil du temps.

4. Procédé selon l'une quelconque des revendications 1 à 3, comportant en outre les étapes de téléchargement (S43) d'une information de mise à jour de la cible de collecte de données ($T_1$) à partir du système de collecte hôte (200) par liaison radio, et de mise à jour (S44) de la cible de collecte de données conformément à l'information de mise à jour.

5. Procédé selon l'une quelconque des revendications 1 à 4, dans lequel, dans le cas où une pluralité d'extraits de données d'enregistrement à télécharger vers l'amont sont sélectionnés à partir des données d'enregistrement, le procédé comprend en outre les étapes suivantes :

le calcul (S10) d'une densité de valeur pour chaque extrait de données d'enregistrement à télécharger vers l'amont, la densité de valeur d'un élément de données correspondant à la valeur de la donnée par unité de temps ; le placement (S10) de la pluralité d'extraits de données d'enregistrement à télécharger vers l'amont dans une file d'attente de priorité de transmission et l'ordonnancement desdits extraits de données d'enregistrement à télécharger vers l'amont dans la file d'attente de priorité de transmission en fonction de ladite densité de valeurs.

6. Procédé selon l'une quelconque des revendications 1 à 5 comportant en outre les étapes suivantes :

à un instant actuel $t_0$, la détermination d'une pluralité d'itinéraires que le véhicule (100) peut emprunter ; pour chaque route, la génération d'un codage de route qui code en valeurs numériques une information sur des valeurs prédites de ladite route pour une pluralité de métriques, la fourniture des codages d'itinéraires et des informations environnementales supplémentaires indépendantes des itinéraires à un agent d'apprentissage qui décide de changer ou non un itinéraire actuel et, s'il y a lieu, sélectionne l'un des itinéraires déterminé, afin d'optimiser une récompense ; l'enregistrement de données provenant des sources de données dans le véhicule au fil du temps pendant que le véhicule roule le long de l'itinéraire sélectionné ; le téléchargement vers l'amont d'au moins une partie des données d'enregistrement vers le système de collecte de données hôte (200) et, en retour, la réception d'une récompense provenant du système de collecte de données hôte (200) ; la fourniture de la récompense à l'agent d'apprentissage par renforcement.

7. Procédé de collecte de données à partir d'une flotte de véhicules d'enregistrement (100), mis en œuvre par un système de collecte hôte (200) connecté à la flotte de véhicules (100) par liaison radio, comprenant les étapes suivantes :

au niveau d'un module de gestion de collecte de données (230), la fourniture (S1) d'une cible de collecte de données ($T_0$), ladite cible de collecte de données ($T_0$) comportant une métrique de valeur de données ($v_{c_j}$) qui est une fonction attribuant une valeur de données à une donnée à un instant donné (i), ladite valeur de données représentant un nombre d'avancées dans la réalisation d'une cible de collecte atomique ($c_j$) ;

le téléchargement (S2) de la cible de collecte de données ($T_0$) vers la flotte de véhicules d'enregistrement (100) par liaison radio ;

la réception (S20) des extraits de données d'enregistrement provenant de la flotte de véhicules (100) par liaison radio ;

la mémorisation (S21) des extraits de données reçus dans une infrastructure de mémorisation (400) ;

le calcul (S22) d'une valeur virtuelle destinée à un extrait de données d'enregistrement téléchargé vers l'amont à partir d'un véhicule (100) de la flotte sur la base de la cible de collecte de données ($T_0$),

la génération (S23) d'une valeur de récompense en fonction de ladite valeur virtuelle, et téléchargement (S24) de ladite valeur de récompense dans ledit véhicule (100) afin de récompenser un composant d'agent d'apprentissage de renforcement (144) du véhicule, c'est-à-dire (100) responsable de la sélection de fragments de données d'enregistrement de valeur élevée.

8. Procédé selon la revendication 7, dans lequel, dans l'étape (S1) de fourniture de la cible de collecte de données ($T_0$, le module de gestion de collecte de données (230) fournit m+1 métriques de valeurs de données ($\{v_{c_0}, ..., v_{c_m}\}$) liées à différentes cibles de collecte atomique ($\{c_0, ..., c_m\}$), avec m$\geq$0, et une politique de collecte (P) définissant m+1 pondérations respectives ($\{p_{c_0}, ..., p_{c_m}\}$) pour les m+1 métriques de valeurs de données ($\{v_{c_0}, ..., v_{c_m}\}$).

9. Procédé selon la revendication 7 ou 8, comportant en outre les étapes suivantes :

au niveau du module de gestion de collecte de données (230), la mise à jour (S40-S41) de ladite cible de collecte de données ($T_0$) selon les extraits de données d'enregistrement déjà reçus de la flotte de véhicules (100), et le téléchargement (S42) des informations de ladite cible de collecte de données ($T_0$) à la flotte de véhicules (100) par liaison radio.

10. Procédé selon l'une quelconque des revendications 7 à 9, dans lequel les métriques de valeurs de données sont générées de manière à attribuer des valeurs de données normalisées.

11. Dispositif d'enregistrement des données du véhicule(140), comportant

au moins une interface (141) pour recevoir des données d'enregistrement provenant des sources de données dans le véhicule (100) et transmettre des extraits de données d'enregistrement à télécharger vers l'amont vers un système de collecte de données hôte (200) par liaison radio ;

un module de mémorisation (142) destiné à mémoriser les données d'enregistrement ;

le moyen apte à exécuter les étapes du procédé selon l'une quelconque des revendications 1 à 6.

12. Véhicule (100) comportant le dispositif d'enregistrement des données du véhicule (140) selon la revendication 11.

13. Système de collecte de données hôte (200) comportant

une première interface (210) pour interfacer avec une flotte de véhicules d'enregistrement (100) par liaison radio ;

une seconde interface (220) pour interfacer avec une infrastructure de mémorisation (400) ; et le moyen apte à exécuter les étapes du procédé selon l'une quelconque des revendications 7 à 10.

FIG. 1

FIG. 2

**100**

**200**

**S1**

Provide T₀ =
$$\left\{v_{c_0}, ..., v_{c_m}\right\} + \left\{p_{c_0}, ..., p_{c_m}\right\}$$

**S3**

| Receive T₀ | ← | Transmit T₀ |

**S2**

| Collect $R$ data |

**S4**

| Store $R$ data in buffer |

**S5**

| Calculate data values acc. $\left\{v_{c_0}, ..., v_{c_m}\right\}$ |

**S6**

**FIG. 3**

| Aggregate data values |

**S7**

| Select:<br>A. piece(s) of data to upload<br>B. piece(s) of data to delete |

**S8**

| Generate queue for piece(s) of data A |

**S9**

| Transmit piece(s) of data A acc. queue | → | Receive each piece of data A |

**S20**

**S10**

| Store piece of data A |

**S21**

| Delete:<br>- piece(s) of data to delete B<br>- piece(s) of data A after upload |

**S11**

| Calc. value for piece of data A |

**S22**

| Gen. reward value for piece of data A |

**S23**

| Provide reward value to RL agent | ← | Tr. reward value for piece of data A |

**S30**

**S24**

**100**

**200**

**S40**

Analyse pieces of data A from
the fleet of vehicles

Determine update to $T_0$

**S41**

**S43**

Receive update INFO ◄─── Download update INFO

**S42**

**S44**

Update $T_0$ ➜ $T_1$

**FIG. 4**

FIG. 5

**Recording data values over time**

a) Metric 1 — $V_{c1}(t)$

b) Metric 2 — $V_{c2}(t)$

c) Metric 3 — $V_{c3}(t)$

**Aggregated data values over time**

d) Aggregated metrics — $V_{C,P}(t)$

## FIG. 6

**Aggregated data values over time**

A) Pieces of data to upload

B) Pieces of data to delete

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6073063 A
- US 6505106 B1
- EP 3618011 A1
- US 2017352261 A1
- CN 112348992 A